# EUROPÄISCHE PATENTSCHRIFT

(11) **EP 2 328 782 B1**
(45) Veröffentlichungstag und Bekanntmachung des Hinweises auf die Patenterteilung: **13.11.2013**
(21) Anmeldenummer: 09778694.1
(22) Anmeldetag: 24.09.2009
(51) Int. Cl.: B60R 11/00, B60R 11/02, B60R 11/04

(54) **TRÄGERVORRICHTUNG ZUR BEFESTIGUNG AN EINER SCHEIBE EINES KRAFTWAGENS**
CARRIER DEVICE FOR ATTACHING TO A PANE OF A MOTOR VEHICLE
DISPOSITIF SUPPORT DESTINÉ À ÊTRE FIXÉ SUR UNE VITRE D'UN VÉHICULE AUTOMOBILE

(30) Priorität: 04.10.2008 DE 102008050320
(43) Veröffentlichungstag der Anmeldung: 08.06.2011
(73) Patentinhaber: Daimler AG, 70327 Stuttgart (DE)
(72) Erfinder: FLEMMING, André, 71116 Gärtringen (DE); KRUG, Martin, 76189 Karlsruhe (DE); SCHLÖMER, Norbert, 49685 Emstek (DE); SEEKIRCHER, Jürgen, 73760 Ostfildern (DE)
(74) Vertreter: JENSEN & SON
(86) Internationale Anmeldenummer: PCT/EP2009/006896
(87) Internationale Veröffentlichungsnummer: WO 2010/037500

(56) Entgegenhaltungen:
- WO-A1-2007/091247
- DE-A1- 10 211 444
- DE-A1- 10 328 468
- DE-A1-102005 002 686
- DE-A1-102006 054 618

## Beschreibung

Die Erfindung betrifft eine Trägervorrichtung zur Befestigung an einer Scheibe, insbesondere einer Windschutzscheibe, der im Oberbegriff des Patentanspruchs 1 angegebenen Art.

Eine solche Trägervorrichtung ist beispielsweise bereits aus der DE 103 28 468 A1 als bekannt zu entnehmen und umfasst eine an der Scheibe eines Kraftwagens befestigbare Trägerplatte, welche zumindest bereichsweise aus einem Kunststoff geschaffen ist und durch welche wenigstens eine Kamera, ein Sensor oder dergleichen getragen ist.

Die DE 102 11 444 A1 beschreibt eine Halterung zum Befestigen eines Bauteils wie etwa einer Kamera oder eines Sensors an einer Windschutzscheibe eines Fahrzeugs. Als Halteelement für das Bauteil ist hierbei ein Haltering vorgesehen. Eine Optik des Sensors oder der Kamera kann bereits in den Haltering integriert sein. Die Halterung ist aus einem mit Glasfasern verstärkten Kunststoff hergestellt.

Die WO 2007/091247 A1 beschreibt eine Halterung zum Befestigen eines Gehäuses einer Kamera an einer Scheibe eines Kraftwagens. An einem rückwärtigen Ende einer blendenartigen Struktur der Halterung ist ein Träger mit einer Öffnung angeordnet. Das Gehäuse weist eine halbkreisförmige Dichtung auf, welche bei an der Struktur angeordnetem Gehäuse in der Öffnung zu liegen kommt. Der Träger weist des Weiteren zwei Befestigungslöcher auf, in welche das Gehäuse an dem Träger fixierende Bolzen aufgenommen sind. Um einen Gierwinkel der Kamera einzustellen, wird zunächst eine auf den ersten Bolzen aufgeschraubte Mutter angezogen und dann eine zweite, auf den zweiten Bolzen aufgeschraubte Mutter, wobei zwischen dieser zweiten Mutter und dem Träger eine Schraubenfeder angeordnet ist. Durch anschließendes weiteres Anziehen oder Lösen der ersten Mutter kann der Gierwinkel besonders fein justiert werden.

Aufgabe der vorliegenden Erfindung ist es, eine Trägervorrichtung der eingangs genannten Art zu schaffen, welche auch bei unterschiedlichen Fahrzeugen auf besonders günstige Weise an der Scheibe zu befestigen ist.

Diese Aufgabe wird erfindungsgemäß durch eine Trägervorrichtung mit den Merkmalen des Patentanspruchs 1 gelöst. Vorteilhafte Ausgestaltungen mit zweckmäßigen und nichttrivialen Weiterbildungen der Erfindung sind in den übrigen Patentansprüchen angegeben.

Um eine Trägervorrichtung der eingangs genannten Art zu schaffen, welche besonders einfach und günstig auch bei unterschiedlichen Fahrzeugen an deren Scheibe anzuordnen ist, ist es erfindungsgemäß vorgesehen, dass die Kunststoffträgerplatte mit einem Zusatzstoff insbesondere einem Glaszusatzstoff, versetzt ist. Mit anderen Worten ist es erfindungsgemäß vorgesehen, einen Kunststoff für die Trägerplatte zumindest bereichsweise einzusetzen, welchem beispielsweise ein Faserwerkstoff oder dergleichen zugesetzt ist. Durch die Zusetzung dieses Zusatzwerkstoffes kann insbesondere erreicht werden, dass bei einer erheblichen Aufwärmung beispielsweise in Folge einer Sonneneinstrahlung unterschiedliche Ausdehnungen der Scheibe, welche üblicherweise aus einem Glaswerkstoff besteht, und der Trägerplatte entsprechend reduziert bzw. einander angeglichen werden. Somit hat es sich als besonders vorteilhaft gezeigt, einen Glaszusatzstoff einzusetzen, welcher derartige Eigenschaften aufweist, dass die Materialausdehnungen der Scheibe der Trägerplatte zumindest etwa ähnlich sind. Im Ergebnis lässt sich hierdurch eine besonders günstige Festlegung der Trägerplatte an der Scheibe realisieren, und zwar beispielsweise mittels Zuhilfenahme eines gängigen Klebstoffes wie zum Beispiel eines PU-Klebers.

Die Trägerplatte weist bei der Erfindung eine als Anschlag dienende Traganordnung auf, gegen welche die Kamera, der Sensor oder dergleichen mit einer von der Trägerplatte in Richtung des Innenraums des Kraftwagens weisenden Kraft abstützen ist. Hierdurch wird eine besonders günstige Toleranzkette und eine positionsgenaue Anordnung der Kamera, des Sensors oder dergleichen erreicht.

In weiterer Ausgestaltung der Erfindung hat es sich darüber hinaus als vorteilhaft gezeigt, wenn die Trägerplatte wenigstens eine Dehnfuge umfasst. Durch eine derartige Dehnfuge kann bei einer entsprechenden Erwärmung eine damit einhergehende Ausdehnung der Trägerplatte relativ zur Scheibe auf verbesserte Weise kompensiert werden.

Des Weiteren hat es sich als vorteilhaft gezeigt, wenn die Trägerplatte auf ihrer der Scheibe zugewandten Seite wenigstens einen Abstandshalter aufweist. Somit wird eine besonders gleichmäßige und reproduzierbare Festlegung der Trägerplatte an der Scheibe erreicht, und zwar insbesondere, wenn ein entsprechender Kleber verwendet wird.

Zudem vorteilhaft ist es, wenn die Trägerplatte von wenigstens einer Belüftungsöffnung durchsetzt ist. Durch eine derartige Belüftungsöffnung werden insbesondere Luftblasen beim Ankleben der Trägerplatte unterbunden.

Weiterhin vorteilhaft ist es, wenn die Trägerplatte wenigstens eine Aussparung aufweist, welche als Blende für die zugeordnete Kamera ausgebildet ist. Somit kommt der Trägerplatte die weitere Funktion der Blende zu, so dass auf ein separates Bauteil verzichtet werden kann. Die die Blende bildende Aussparung der Trägerplatte weist dabei bevorzugt eine Umrandung auf, welche gegenüber der der Scheibe zugewandten Seite der Trägerplatte erhaben absteht. Durch diese erhaben abstehende Umrandung wird erreicht, dass die Umrandung nach dem Aufkleben auf die Scheibe direkt an deren Oberfläche anliegt, so dass ein wirkungsvoller Staubschutz geschaffen ist.

Zudem vorteilhaft ist es, wenn die die Kamera, den Sensor oder dergleichen gegen die Traganordnung stützenden Kraft mittels einer an der Trägerplatte angeordneten Federanordnung aufbringbar ist. Durch diese Federanordnung wird stets eine gleich bleibende Kraft aufgebracht, weiche die Kamera zuverlässig in ihrer Position hält.

Als weiterhin vorteilhaft hat sich eine Abdeckung gezeigt, mittels welcher die wenigstens eine Kamera, der Sensor oder dergleichen abdeckbar ist und welche relativ einstellbar an der Trägerplatte angeordnet ist. Durch diese Einstellbarkeit der Abdeckung relativ zur Trägerplatte lassen sich Toleranzen von Fahrzeug zu Fahrzeug äußerst günstig ausgleichen, so dass beispielsweise die Abdeckung stets bündig an einen Fahrzeughimmel des Kraftwagens anschließt.

Zur Einstellung der Abdeckung relativ zur Trägerplatte sind in weiterer Ausgestaltung der Erfindung an beiden zusammen wirkenden Bauteilen jeweilige Führungselemente vorgesehen, wobei die Einstellung der beiden Bauteile relativ zueinander alternativ entweder gestuft oder aber stufenlos erfolgen kann. Durch die Führungselemente wird dabei eine besonders einfache und lagesichere Einstellung ermöglicht.

In weiterer Ausgestaltung der Erfindung weist die Abdeckung eine Blende auf. Somit kann auf eine separate Blende verzichtet werden, so dass sich insgesamt eine Trägervorrichtung mit äußerst wenigen Bauteilen - nämlich im Wesentlichen lediglich die Trägerplatte und die Abdeckung - realisieren lässt. Die Abdeckung ist dabei vorzugsweise zumindest partiell mit einem Lack versehen, um einen besonders günstigen Schutz gegen Streulicht zu schaffen.

Weiterhin vorteilhaft hat sich eine Scheibenheizung gezeigt, welche in die Trägervorrichtung integriert ist. Hierdurch kann auf einfache Weise ein Bereich der Scheibe vor der Trägervorrichtung erwärmt werden, um ein Beschlagen der Scheibe zu vermeiden.

Weiter vorteilhaft ist es, wenn der Zusatzwerkstoff, welcher dem Kunststoff beigesetzt ist, Verstärkungsfasern und insbesondere Glasfasern aufweist. Alternativ kann dieser Zusatzwerkstoff auch Glaskugeln oder dergleichen aufweisen. Insgesamt hat sich Glaswerkstoff als besonders vorteilhaft gezeigt, da dieser zumindest im Wesentlichen identische Eigenschaften wie die Scheibe des Kraftwagens aufweist, so dass hierdurch eine Annäherung der Ausdehnungskoeffizienten des Kunststoffs und der Scheibe möglich ist. Es wird somit insbesondere ein - in der Wärme dehnungsarmer - Kunststoff verwendet, der ein möglichst gleiches Ausdehnungsverhalten besitz wie die Windschutzscheibe. Dies bedeutet, dass der Kunststoff vorzugsweise möglichst viel Glasfaser oder Glaskugeln aufweist, also z.B. PBT GF 30 oder PBT GB 20.

Dabei hat es sich als besonders vorteilhaft gezeigt, wenn der Anteil an Zusatzwerkstoff bzw. Glaswerkstoff in einem Bereich von 10% bis 40% und insbesondere von 20% bis 30%, liegt.

Weitere Vorteile, Merkmale und Einzelheiten der Erfindung ergeben sich aus der nachfolgenden Beschreibung bevorzugter Ausführungsbeispiele sowie anhand der Zeichnungen; diese zeigen in:
- Fig. 1: eine ausschnittsweise Perspektivansicht auf die an einer Windschutzscheibe angeordnete Trägervorrichtung für eine Mehrzahl von Kameras, Sensoren oder dergleichen, wobei vorliegend eine Abdeckung der Trägervorrichtung erkennbar ist,
- Fig. 2: eine ausschnittsweise Perspektivansicht auf die Trägervorrichtung gemäß Fig. 1 bei abgenommener Abdeckung, wobei insbesondere eine Trägerplatte erkennbar ist mittels welcher die Mehrzahl von Kameras, Sensoren oder dergleichen getragen ist und welche mittels eines Klebers an der Innenseite der Scheibe befestigt ist;
- Fig. 3: eine Perspektivansicht auf die Trägerplatte gemäß Fig. 2, wobei der Übersichtlichkeit halber insbesondere die Kameras, Sensoren oder dergleichen weggelassen sind;
- Fig. 4: eine weitere Perspektivansicht auf die Trägerplatte gemäß Fig. 3, und zwar auf die der Windschutzscheibe zugewandte Seite der Trägerplatte;
- Fig. 5: eine ausschnittsweise Perspektivansicht auf die Anordnung der Trägervorrichtung gemäß den Fig. 1 und 2, wobei die Abdeckung sowie die Kameras, Sensoren oder dergleichen der Übersichtlichkeit halber weggelassen sind;
- Fig. 6: eine ausschnittsweise Perspektivansicht von außen her auf die Windschutzscheibe und die dahinter angeordnete Trägervorrichtung;
- Fig. 7: eine ausschnittsweise Perspektivansicht von der Innenseite her auf die Anordnung der Trägervorrichtung an der Windschutzscheibe gemäß einer zweiten Ausführungsform;
- Fig. 8: eine ausschnittsweise Perspektivansicht von innen her auf die Trägervorrichtung bei weggelassener Abdeckung, wobei insbesondere durch die Trägerplatte gehaltenen Kameras, Sensoren oder dergleichen erkennbar sind;
- Fig. 9: eine Perspektivansicht auf die Trägerplatte der Trägervorrichtung gemäß den Fig. 7 und 8;
- Fig. 10: eine Perspektivansicht auf die der Scheibe zugewandte Seite der Trägerplatte gemäß Fig. 9;
- Fig. 11: eine ausschnittsweise Perspektivansicht auf die mit der Innenseite der Windschutzscheibe verklebte Trägerplatte der Trägervorrichtung gemäß den Fig. 7 und 8;
- Fig. 12: eine Perspektivansicht auf die Abdeckung der Trägerplatte gemäß Fig. 7 und
- Fig. 13: eine Perspektivansicht auf die Innenseite der Abdeckung gemäß Fig. 12.

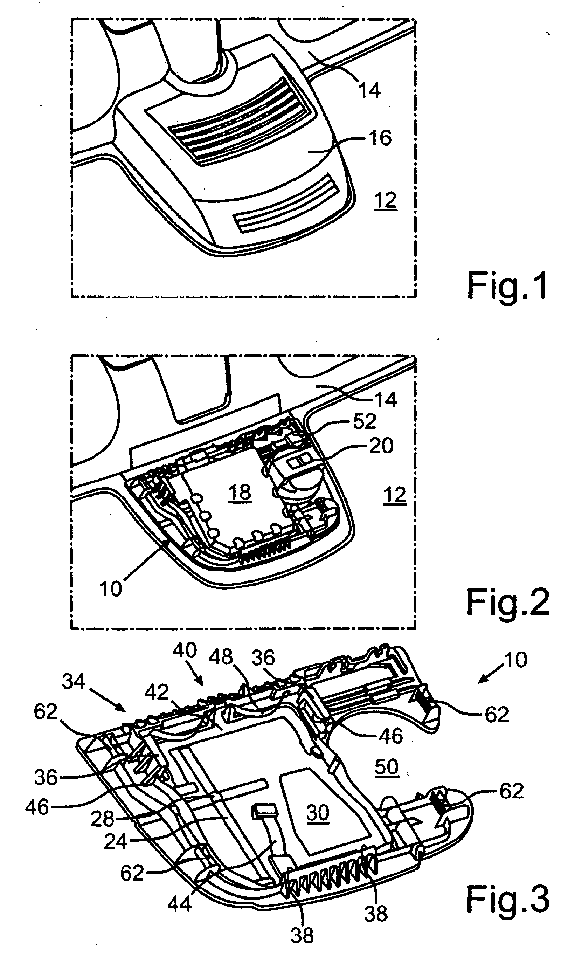

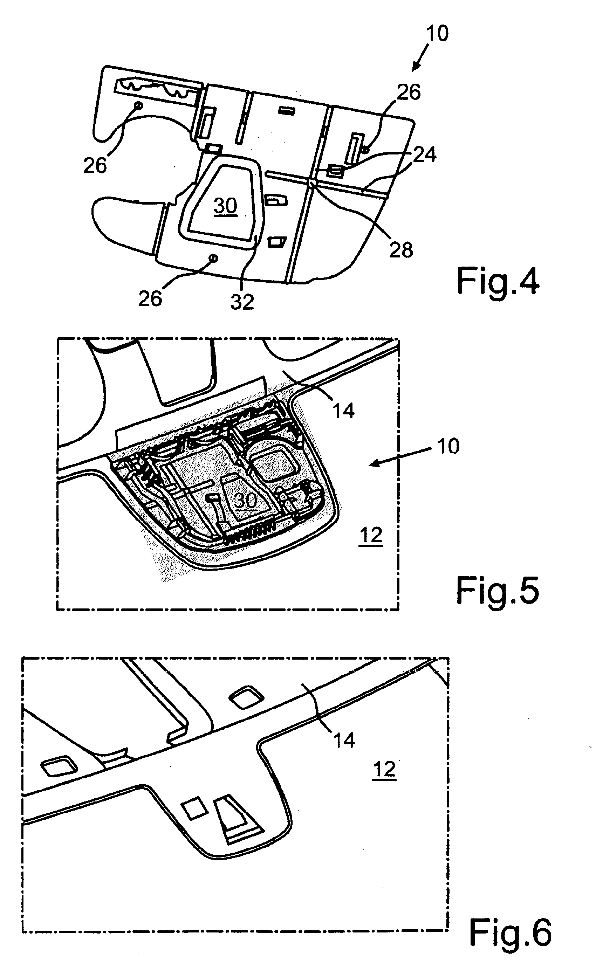

In den Fig. 1 bis 6 ist eine erste Ausführungsform der Trägervorrichtung dargestellt. Die Fig. 1, 2 und 5 zeigen dabei die Anordnung der Trägervorrichtung jeweils vom Fahrzeuginnenraum her. Die Fig. 3 und 4 zeigen eine separate, im Weiteren noch näher erläuterte Trägerplatte 10, welche auf im Weiteren noch näher beschriebene Weise innenseitig an eine in den Fig. 1, 2 und 5 erkennbare Windschutzscheibe 12 angeklebt ist, und zwar im Übergangsbereich der Windschutzscheibe 12 zu einem Fahrzeughimmel 14 hin. Die Fig. 6 zeigt schließlich die Anordnung der Trägervorrichtung in einem Blick von der Außenseite her auf die Windschutzscheibe 12 bzw. den Fahrzeughimmel 14.

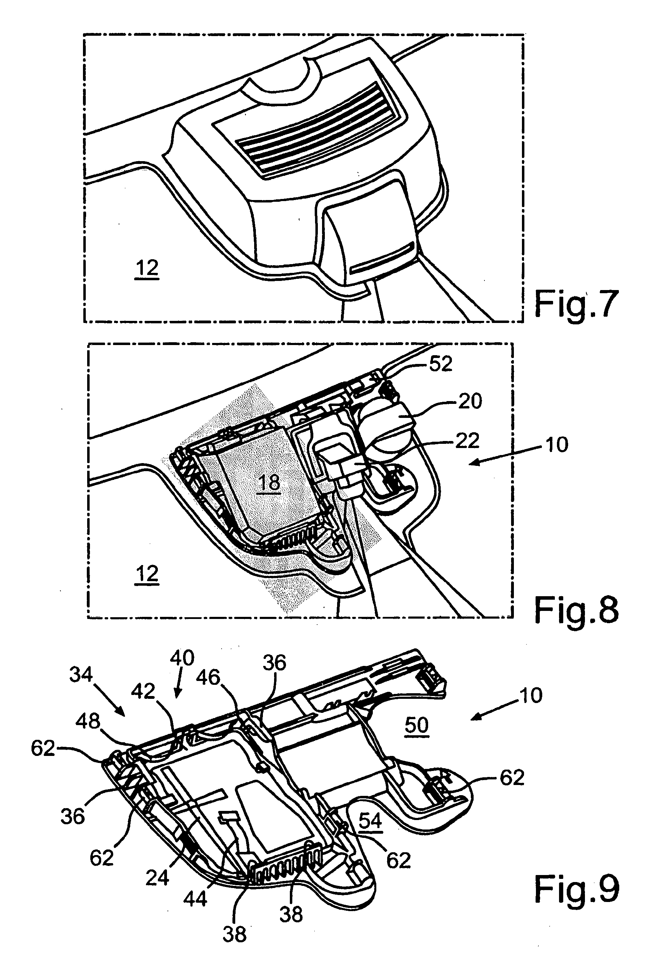

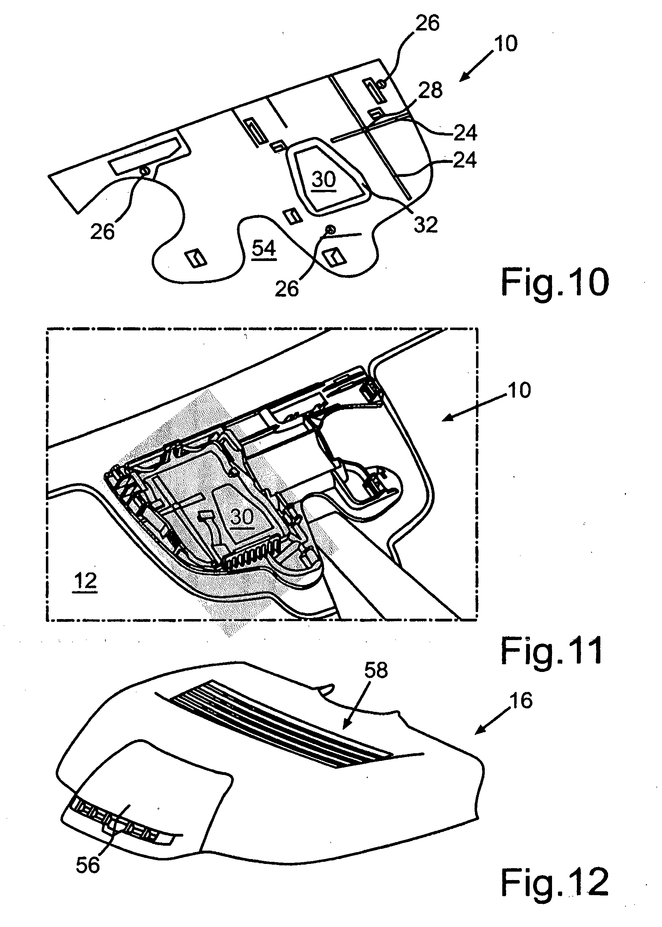

Die Fig. 7 bis 13 zeigen hingegen eine zweite Ausführungsform der vorliegenden Trägervorrichtung, welche sich insbesondere dadurch von der ersten Ausführungsform unterscheidet, dass eine zusätzliche, im Weiteren noch näher erläuterte Kamera vorgesehen wird. Die Fig. 7 und 8 zeigen dabei - analog zu den Fig. 1 und 2 - wiederum die Anordnung der Trägervorrichtung an der Windschutzscheibe 10 vom Innenraum des Kraftwagens her, und zwar im Übergangsbereich zum Fahrzeughimmel 14. Die Fig. 9 und 10 zeigen hingegen in jeweiliger Perspektivansicht eine zweite Ausführungsform der Trägerplatte 10, wobei die Trägerplatte jedoch zu einem Großteil identisch ausgebildet ist wie diejenige gemäß den Fig. 3 und 4.

Fig. 11 zeigt die Anordnung der Trägerplatte 10 unter Vermittlung eines Klebers an der Windschutzscheibe 12 von innen her.

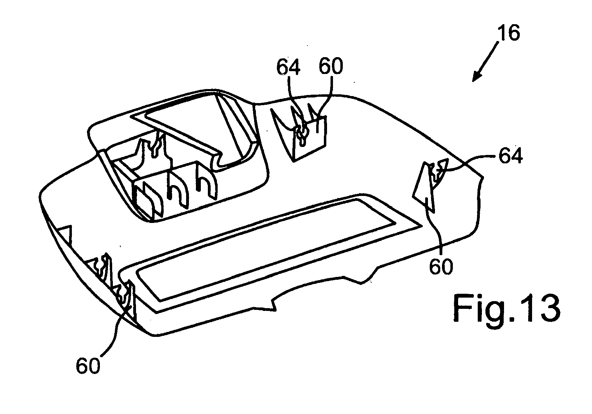

Die Fig. 12 und 13 zeigen schließlich in einer jeweiligen Perspektivansicht eine Abdeckung 16 der Trägervorrichtung gemäß der zweiten Ausführungsform (Fig. 7 bis 13).

Da bei beiden Ausführungsformen wesentliche Grundfunktionen übereinstimmen, sind beide Ausführungsform - soweit Übereinstimmung herrscht - nachfolgend gemeinsam beschrieben bzw. mit identischen Bezugszeichen versehen.

Die Tragvorrichtungen gemäß beiden Ausführungsformen umfassen dabei zunächst die Abdeckung 16, welche die Tragvorrichtung zur Fahrzeuginnenseite hin abschließt. Wird diese Abdeckung 16 abgenommen, so ist im Wesentlichen ein Blick auf die Trägervorrichtung freigegeben, wie dies in den Fig. 2 und 8 erkennbar ist. In Übereinstimmung der Fig. 2 und 8 ist beim jeweiligen Ausführungsbeispiel eine Vielzweckkamera 18 vorgesehen, welche beispielsweise in eine Spurhalteeinrichtung, eine Verkehrszeichenerkennung oder zur Einparkhilfe nutzbar ist. Des Weiteren ist bei beiden Ausführungsformen ein Regen- und Lichtsensor 20 getragen, über welchen entsprechend Regen bzw. Licht zur Steuerung beispielsweise der Scheibenwischeranlage, der Klimaanlage und der Fahrzeugbeleuchtung genutzt wird.

Im Unterschied zur Ausführungsform gemäß den Fig. 1 bis 6 ist bei der Ausführungsform gemäß den Fig. 7 bis 13 darüber hinaus eine weitere Kamera 22 vorgesehen, welche vorliegend für ein Nachtsichtsystem eingesetzt wird. Dem Fachmann ist klar, dass eine zusätzliche Anzahl von Bauteilen, insbesondere Kameras und Sensoren vorgesehen sein können. Die Anordnung der Kameras uns Sensoren kann darüber hinaus ebenso variiert werden wie deren Verwendung für unterschiedliche Einsatzzwecke.

Um nun den Blick auf die jeweilige Trägerplatte 10 gemäß den Fig. 3 und 4 bzw. den Fig. 9 und 10 auszurichten, ist zunächst anzumerken, dass die Trägerplatte 10 jeweils aus einem Kunststoff mit einem Zusatzwerkstoff, insbesondere einem Glaswerkstoff, besteht. Dieser Glaswerkstoff kann beispielsweise eine Glasfaser oder Glaskugeln behinhalten, wobei der Zusatzwerkstoff beispielsweise einen Anteil von 10% bis 40% und insbesondere von 20% bis 30% bezogen auf den gesamten Kunststoff ausmacht. Dieser Zusatzwerkstoff bewirkt, dass Trägerplatte 10 ähnliche Ausdehnungseigenschaften bzw. einen ähnlichen Ausdehnungskoeffizienten erhält wie die Windschutzscheibe 12. Erwärmt sich demzufolge die Windschutzscheibe 12 bzw. im Innenraum des Kraftwagens die Trägerplatte 10, so dehnen sich die beiden Teile entsprechend zumindest im Groben gleichmäßig aus. Dies hat zur Folge, dass sich eine besonders günstige Befestigung der Trägerplatte an der Windschutzscheibe 12 realisieren lässt. Mithin wird somit eine besonders zuverlässige und gleich bleibende Anordnung der Kameras und Sensoren 18 bis 22 erreicht, was sich in positiver Weise auf deren Mess- bzw. Erfassungsergebnisse auswirkt. Um den Kamerawinkel fahrzeugspezifisch richtig einzustellen, ist von Baureihe zu Baureihe eine jeweils in der Kameraaufnahme unterschiedlich ausgeformte Trägerplatte 10 möglich. Die Grundkonstruktion muss sich deshalb aber nicht ändern.

Des Weiteren ist in beiden Ausführungsformen auf der der Windschutzscheibe 12 zugewandten Seite der Trägerplatte eine Mehrzahl von Dehnfugen 24 erkennbar, welche teilweise gekreuzt verlaufen. Diese Dehnfugen 24 sind im vorliegenden Fall als Nuten ausgebildet, welche von der der Windschutzscheibe 12 zugewandten Seite in die Trägerplatte 10 eingebracht sind. Durch diese Dehnfugen 24 wird zusätzliche eine besonders günstige Anordnung der Trägerplatte 10 an der Windschutzscheibe 12 erreicht. Um die in der Platte 10 verbleibenden mechanischen Spannungen auszugleichen zu können, sind somit in der Y-Lage und senkrecht dazu die verschiedenen Dehnfugen 24 angeordnet.

Außerdem ist aus den Fig. 3 und 4 bzw. 9 und 10 erkennbar, dass auf der der Windschutzscheibe 12 zugewandten Seite eine Mehrzahl von Abstandshaltern 26 angeformt sind, welche in angeordneter Stellung der Trägerplatte 10 an der Oberfläche der Windschutzscheibe 12 abgestützt sind. Die Trägerplatte 10 wird dabei beispielsweise durch einen PU-Kleber oder einen anderen, möglichst elastischen Kleber an der Windschutzscheibe 12 fixiert, wobei die noppenartigen Abstandshalter 26 eine exakte Beabstandung der Trägerplatte 10 gegeben ist. Der möglichst elastische Kleber sorgt dabei für einen Ausgleich von gegebenenfalls noch unterschiedlichen Ausdehnungen zwischen Windschutzscheibe 12 und Trägerplatte 10. Bevorzugt werden wenigstens 3 Abstandshalter (ca. 1 mm hoch) eingesetzt, um eine gleichmäßige Dicke des Klebers zu gewährleisten. Je größer die Dicke der Trägerplatte, umso mehr Längenänderung sollte der Kleber ausgleichen können. Die Öffnungen, Durchbrüche, Schlitze und Dehnfugen in der Trägerplatte dienen zum Belüften der Klebeschicht, damit der Kleber entsprechend aushärtet.

Zudem sind aus den Fig. 3 und 4 bzw. 9 und 10 eine Mehrzahl von Durchgangsöffnungen 28 auf der Trägerplatte 10 erkennbar, über welche beim Aufkleben der Trägerplatte 10 entsprechend eingeschlossene Luft entweichen kann. Somit kann durch die Durchgangsöffnungen 28 ein besonders homogenes Kleberbett zwischen der Trägerplatte 10 und der Windschutzscheibe 12 erreicht werden.

In beiden Ausführungsformen ist eine im Wesentlichen trapezförmige Aussparung 30 erkennbar, über welche die Vielzweckkamera 18 durch die Trägerplatte 10 hindurch in Richtung nach außen filmen kann. Die Aussparungen 30 sind dabei als Blende für die Vielzweckkamera 18 und ist demzufolge entsprechend geometrisch ausgebildet. Somit hat die Trägerplatte 10 nicht nur die Funktion der Halterung der verschiedenen Kameras bzw. Sensoren 18 bis 22, sondern auch die Funktion einer Blende für die Vielzweckkamera 18. Die Aussparung 18 umfasst dabei - wie aus den Fig. 4 und 10 erkennbar ist - eine Umrandung 32, welche als Dichtung vorgesehen ist und gegenüber der der Windschutzscheibe 12 zugewandten Seiten der Trägerplatte 10 erhaben absteht. Insbesondere ist dabei die Umrandung 32 in ihrer erhaben abstehenden Höhe so bemessen, dass diese gleich hoch ausgebildet ist wie die Abstandshalter 26 und demzufolge der Anordnung der Trägerplatte 10 an der Windschutzscheibe 12 mit deren nach innen gewandten Oberfläche in Anlage kommt. Die Umrandung 32 dient somit als Staubdichtung, so dass kein Staub in den Bereich der Aussparung 30 kommen kann. Wie insbesondere aus den Fig. 3 und 5 bzw. 9 und 11 erkennbar ist, umfasst die Trägerplatte 10 jeweils eine Traganordnung 34, welche im vorliegenden Fall vier Tragelemente - zwei obere Tragelemente 36 und zwei untere Tragelemente 38 - umfasst, gegen welche die Vielzweckkamera 18 mit einer in Richtung zum Fahrzeuginnenraum bzw. von der Trägerplatte 10 weg weisenden Kraft zu beaufschlagen ist. Diese Kraft wird erzeugt durch eine Federanordnung 40 mit zwei Federelementen 42 und 44. Die Tragelemente 36 und 38 umfasst dabei eine Referenzfläche 46, gegen welche eine korrespondierende, im Wesentlichen nicht erkennbare Fläche der Vielzweckkamera 18 gedrückt wird. Somit wird gewährleistet, dass die Vielzweckkamera 18 durch die Kraft der Federelemente 42 und 44 gleichmäßig gegen die Referenzflächen 46 der Tragelemente 36 bzw. 38 gedrückt wird, so dass sich eine reproduzierbare und mit einer geringen Toleranzkette beaufschlagte Positionierung der Vielzweckkamera 18 ergibt. Die Vielzweckkamera 18 kann dabei in die Traganordnung 34 eingesetzt werden, in dem diese gegen die Federkraft eines weiteren Federelements 48 eingesetzt wird, wobei dieses weitere Federelement dafür sorgt, dass die eingesetzte Vielzweckkamera 18 gegen die unteren Tragelemente 38 gedrückt ist. Auch hierdurch wird eine optimale Positionierung der Vielzweckkamera 18 erreicht. Somit ist erkennbar, dass durch die Federn 42, 44 die MPC-Kamera 18 spielfrei und mit geringsten Toleranzen in der Endposition gehalten wird. Zum von außen auf die Scheibe 12 sichtbaren trapezförmigen Bereich bzw. der Aussparung 30 der Platte 10 ist Folgendes zu sagen: Die Kaschierung des notwendigen Abstandes des Sichtkeils zum Schwarzdruck - mit Toleranzen - dieser Bereich kann genarbt, schwarz oder eingefärbt werden, so dass man diesen Bereich von außen nicht mehr vom Schwarzdruck unterscheiden kann.

An einer Außenseite der Trägerplatte 10 ist darüber hinaus eine weitere Aussparung 50 erkennbar, in welcher der Regen- und Lichtsensor 20 eingesetzt ist.

Oberhalb der Aussparung 50 ist in den Fig. 2. 5 und 8 ein Lötverteiler 52 erkennbar.

Des Weiteren kann im Bereich der Trägerplatte 10 ein Scheibenheizmodul bzw. eine Scheibenheizung integriert sein, welche insbesondere dafür sorgt, dass im Bereich der Kameras und Sensoren 18 bis 22 kein Beschlagen der Windschutzscheibe auftreten kann.

Insbesondere aus Fig. 8 ist darüber hinaus erkennbar, dass im Unterschied zur Ausführungsform gemäß Fig. 1 - dort insbesondere erkennbar in Fig. 2 - die Kamera 22 zwischen der Vielzweckkamera 12 und dem Regenlichtsensor 20 vorgesehen ist.

Entsprechend ist insbesondere aus den Fig. 9 und 10 erkennbar, dass die Trägerplatte 10 gemäß der zweiten Ausführungsform eine weitere Aussparung 54 für diese Kamera 22 aufweist, welche gegebenenfalls ebenfalls als Blende dient. Auf den Fig. 12 und 13, welche die Abdeckung 16 für die Trägervorrichtung gemäß der zweiten Ausführungsform zeigt, ist erkennbar, dass eine Streulichtblende 56 eingeformt ist. Diese Streulichtblende 56 ist entsprechend an die Aussparung 54 der Trägerplatte 10 gemäß der zweiten Ausführungsform angepasst, so dass sich insgesamt ein trichterförmiges Element ergibt. Die Streulichtblende 56 gemäß den Fig. 12 und 13 ist innenseitig mit einem entsprechenden Lack versehen. Somit hat die Abdeckung 16 nicht nur eine Schutzfunktion bzw. Abdeckungsfunktion für die gesamte Trägervorrichtung, sondern darüber hinaus auch die weitere Funktion der Bereitstellung der Streulichtblende 56.

Beiden Ausführungsformen ist es darüber hinaus gemeinsam, dass die jeweiligen Abdeckungen - wie aus den Fig. 1 und 7 erkennbar ist - mit jeweiligen lamellenartigen Belüftungsöffnungen 58 versehen ist. Die Belüftungsöffnungen 58 können entsprechend nach innen versetzt zurückspringend angeordnet sein, um für einen im Nahbereich der Abdeckung 16 angeordneten Innenrückspiegel einen größeren Verstellbereich bereitstellen zu können.

Die jeweilige Abdeckung 16 gemäß der ersten bzw. zweiten Ausführungsform ist auf im Weiteren noch näher beschriebene Weise einstellbar an der korrespondierenden Trägerplatte 10 befestigt. Dies ist insbesondere erforderlich, um eine fertigungsbedingt unterschiedliche Positionierung der Trägervorrichtung bzw. der Trägerplatte 10 relativ beispielsweise zum Fahrzeughimmel 14 ausgleichen zu können. Im vorliegenden Fall wird diese Einstellbarkeit durch jeweilige Führungselemente 60 bzw. 62 realsiert. Auf Seiten der Trägerplatte 16 sind dabei jeweilige Führungsschienen 62 vorgesehen, welche sich allesamt parallel zueinander im Wesentlichen in Fahrzeuglängsrichtung bzw. in eine Richtung erstrecken. Auf diese Führungselemente 62 ist die Abdeckung 16 unter Vermittlung ihrer Führungselemente 60, welche im Wesentlichen kreisförmige Aussparungen 64 aufweisen, steckbar und entsprechend entlang den schienenartigen Führungselementen 62 verschiebbar. Dabei können zwischen den Führungselementen 60 und 62 entsprechende Aststufen, Verzahnungen oder dergleichen vorgesehen sein, so dass die Verstellung gestuft erfolgt. Ebenfalls eine stufenlose Verstellung denkbar. Hierzu wären die Führungselemente 62 im Wesentlichen glatt auszubilden. Insgesamt ist jedoch erkennbar, dass die Führungselemente 60, 26 auf Seiten der Trägerplatte 10 bzw. der Abdeckung 16 eine Einstellbarkeit der Abdeckung geschaffen ist, so dass diese in Fahrzeuglängsrichtung und parallel der Erstreckungsrichtung der Windschutzscheibe 12 verstellt werden kann. Hierdurch können fertigungstechnische Toleranzen, welche beispielsweise beim Einbau der Windschutzscheibe 12 entstehen, ausgeglichen werden, so das die Abdeckung 16 beispielsweise bündig mit dem Fahrzeughimmel 14 angeordnet werden kann. Aus Fig. 6 ist die Anordnung der Trägervorrichtung schließlich von außerhalb des Kraftwagens erkennbar. Bei Ausführungsform gemäß den Fig. 7 bis 13 ist diese im Wesentlichen identisch, nur dass darüber hinaus die entsprechende Aussparung 54 vorgesehen ist für die weitere Kamera 22.

Insgesamt ist aus den Fig. somit erkennbar, dass vorliegend an der Trägerplatte 10 eine Vielzahl von Elementen angeformt sind bzw. sein können, wie beispielsweise Befestigungselemente für die Kamera 18, 22, Befestigungselemente für die Federn 42,44, Clipse für Sensoren 20, Clipse für Kontaktierungseinrichtungen, Clipse für die Heizung, Clipse für einen Transportschutz --bzw. Staubschutz, verzahnte Clipsbolzen für die Kappenverrastung der Abdeckung 16, Dehnfugen 24, Y0-Kennzeichnungen bzw. Markierungen zur Positionierung an der Windschutzscheibe, Abstandshalter 26, sowie Luftleit-Stege, um die Fahrzeuginnenluft schnell an den Beschlagssensor weiterzuleiten. In die Trägerplatte 10 können beispielsweise auch Metallführungen oder andere Kunststoffteile mit angespritzt werden, um beispielsweise auch den Regen- und Lichtsensor 20 kostengünstig aufrasten zu können.

Zum Transportschutz bzw. zum staubfreien Transport kann in die Trägerplatte zusätzlich ein ausclipsbarer Transportschutz in das Kamerafenster geclipst werden. Dies kann am Band wieder weggeclipst werden.

## Patentansprüche

1. Trägervorrichtung zur Befestigung an einer Scheibe, insbesondere einer Windschutzscheibe (12), eines Kraftwagens, mit einer an der Scheibe (12) befestigbaren Trägerplatte (10), welche zumindest bereichsweise aus einem Kunststoff geschaffen ist und durch welche wenigstens eine Kamera (22), ein Sensor (20) oder dgl. getragen ist,
wobei
der Kunststoff der Trägerplatte (10) mit einem Zusatzstoff, insbesondere mit einem Glaszusatzwerkstoff, versetzt ist,
**dadurch gekennzeichnet, dass**
die Trägerplatte (10) eine als Anschlag (36, 38) dienende Traganordnung (34) aufweist, gegen welche die Kamera (22), der Sensor (20) oder dgl. mit einer von der Trägerplatte (10) in Richtung des Innenraums des Kraftwagens weisenden Kraft abzustützen ist.

2. Trägervorrichtung nach Anspruch 1,
**dadurch gekennzeichnet, dass**
die Trägerplatte (10) wenigstens eine Dehnfuge (24) umfasst.

3. Trägervorrichtung nach Anspruch 1 oder 2,
**dadurch gekennzeichnet, dass**
die Trägerplatte (10) auf ihrer der Scheibe (12) zugewandten Seite wenigstens einen Abstandshalter (26) aufweist.

4. Trägervorrichtung nach einem der Ansprüche 1 bis 3,
**dadurch gekennzeichnet, dass**
die Trägerplatte (10) von wenigstens einer Belüftungsöffnung (28) durchsetzt ist.

5. Trägervorrichtung nach einem der Ansprüche 1 bis 3,
**dadurch gekennzeichnet, dass**
die Trägerplatte (10) wenigstens eine Aussparung (30) aufweist, welche als Blende für die zugeordnete Kamera (22) ausgebildet ist.

6. Trägervorrichtung nach Anspruch 5,
**dadurch gekennzeichnet, dass**
die die Blende bildende Aussparung (30) der Trägerplatte (10) eine Umrandung (32) aufweist, welche gegenüber der der Scheibe (12) zugewandten Seite der Trägerplatte (10) erhaben absteht.

7. Trägervorrichtung nach einem der Ansprüche 1 bis 6,
**dadurch gekennzeichnet, dass**
die die Kamera (22), den Sensor oder dgl. gegen die Traganordnung (34) stützende Kraft mittels einer an der Trägerplatte (10) angeordneten Federanordnung (40) aufbringbar ist.

8. Trägervorrichtung nach einem der Ansprüche 1 bis 7,
**dadurch gekennzeichnet, dass**
eine Abdeckung (16) vorgesehen ist, mittels welcher die wenigstens eine die Kamera (22), der Sensor (20) oder dgl. abdeckbar ist und welche relativ einstellbar an der Trägerplatte (10) angeordnet ist.

9. Trägervorrichtung nach Anspruch 8,
**dadurch gekennzeichnet, dass**
zur Einstellung der Abdeckung (16) relativ zur Trägerplatte (10) an beiden Bauteilen (10, 16) miteinander zusammenwirkende Tragelemente (36, 38) vorgesehen sind, wobei die Einstellung gestuft oder stufenlos erfolgt.

10. Trägervorrichtung nach einem der Ansprüche 8 oder 9,
**dadurch gekennzeichnet, dass**
die Abdeckung (16) eine Blende (56) aufweist.

11. Trägervorrichtung nach Anspruch 10,
**dadurch gekennzeichnet, dass**
die Abdeckung (16) zumindest partiell mit einem Lack versehen ist.

12. Trägervorrichtung nach einem der Ansprüche 1 bis 11,
**dadurch gekennzeichnet, dass**
eine Scheibenheizung in die Trägervorrichtung, insbesondere die Trägerplatte (10), integriert ist, mittels welcher zumindest ein Bereich der Scheibe (12) nahe der Kamera (22), des Sensor oder dgl. zu beheizen ist.

13. Trägervorrichtung nach einem der Ansprüche 1 bis 12,
**dadurch gekennzeichnet, dass**
der Zusatzstoff durch Verstärkungsfasern, insbesondere Glasfasern, gebildet ist.

14. Trägervorrichtung nach einem der Ansprüche 1 bis 12,
**dadurch gekennzeichnet, dass**
der Zusatzstoff durch Glaskugeln gebildet ist.

15. Trägervorrichtung nach einem der Ansprüche 1 bis 14,
**dadurch gekennzeichnet, dass**
der Kunststoff einen Anteil von 10 bis 40%, und insbesondere von 20 bis 30% an Zusatzstoff aufweist.

## Claims

1. Carrier device for attaching to a glass pane, in particular a windscreen (12), of a motor car, having a carrier plate (10) which can be attached to the windscreen (12), the carrier plate (10) being made of plastic at least in segments and by which a camera (22), a sensor (20) or similar is carried, wherein
the plastic of the carrier plate (10) is permeated with an additive material, in particular with a glass additive material,
**characterised in that**
the carrier plate (10) comprises a carrying arrangement (34) serving as a stop element (36, 38), against which the camera (22), the sensor (20) or similar is to be supported with a force pointing from the carrier plate (10) in the direction of the interior of the motor car.

2. Carrier device according to claim 1,
**characterised in that**
the carrier plate (10) comprises at least one expansion joint (24).

3. Carrier device according to claim 1 or 2,
**characterised in that**
the carrier plate (10) has at least one spacer (26) on the side facing the windscreen (12).

4. Carrier device according to one of the claims 1 to 3,
**characterised in that**
the carrier plate (10) is permeated by at least one venting opening (28).

5. Carrier device according to one of the claims 1 to 3,
**characterised in that**
the carrier plate (10) has at least one recess (30) which is formed as a face plate for the associated camera (22).

6. Carrier device according to claim 5,
**characterised in that**
the recess (30) of the carrier plate (10), forming the face plate, has a border (32) which projects in an elevated manner in comparison with the side of the carrier plate (10) facing the windscreen (12).

7. Carrier device according to one of the claims 1 to 6,
**characterised in that**
the force supporting the camera (22), the sensor or similar against the carrying arrangement (34) can be applied by means of a spring assembly (40) arranged on the carrier plate (10).

8. Carrier device according to one of the claims 1 to 7,
**characterised in that**
a cover (16) is provided, by means of which the at least one of the camera (22), the sensor (20) or similar can be covered, and which is arranged on the carrier plate (10) in a relatively adjustable manner.

9. Carrier device according to claim 8,
**characterised in that**
cooperating carrier elements (36, 38) are provided on both components (10, 16) for adjusting the cover (16) relative to the carrier plate (10), wherein the adjustment takes place in a stepped or stepless manner.

10. Carrier device according to one of the claims 8 or 9,
**characterised in that**
the cover (16) comprises a face plate (58).

11. Carrier device according to claim 10,
**characterised in that**
the cover (16) is provided at least partially with a coating.

12. Carrier device according to one of the claims 1 to 11,
**characterised in that**
a windscreen heater is integrated into the carrier device, in particular the carrier plate (10), by means of which at least one region of the windscreen (12) can be heated close to the camera (22), the sensor or similar.

13. Carrier device according to one of the claims 1 to 12,
**characterised in that**
the additive material is formed by reinforcing fibres, in particular glass fibres.

14. Carrier device according to one of the claims 1 to 12,
**characterised in that**
the additive material is formed by glass beads.

15. Carrier device according to one of the claims 1 to 14,
**characterised in that**
the plastic has a proportion of 10 to 40%, and in particular 20 to 30%, of additive material.

## Revendications

1. Dispositif support destiné à être fixé sur une vitre, en particulier un pare-brise (12), d'un véhicule à moteur, comprenant une plaque de support (10) pouvant être fixée sur la vitre (12), qui est fabriquée au moins partiellement dans une matière plastique et qui permet de supporter au moins une caméra (22), un capteur (20) ou analogue, la matière plastique de la plaque support (10) étant mélangée à un additif, en particulier un matériau d'apport en verre, **caractérisé en ce que** la plaque de support (10) présente un agencement support (34) servant de butée (36, 38), contre laquelle la caméra (22), le capteur (20) ou similaire doit reposer par l'intermédiaire d'une force exercée par la plaque de support (10) dans la direction de l'intérieur du véhicule.

2. Dispositif support selon la revendication 1, **caractérisé en ce que** la plaque de support (10) comprend au moins un joint de dilatation (24).

3. Dispositif support selon la revendication 1 ou la revendication 2, **caractérisé en ce que** la plaque de support (10) présente au moins une entretoise (26) sur son côté orienté vers le pare-brise (12).

4. Dispositif support selon l'une quelconque des revendications 1 à 3, **caractérisé en ce que** la plaque de support (10) est traversée au moins par une ouverture d'aération (28).

5. Dispositif support selon l'une quelconque des revendications 1 à 3, **caractérisé en ce que** la plaque de support (10) présente au moins un évidement (30), lequel est conçu comme un écran pour la caméra associée (22).

6. Dispositif support selon la revendication 5, **caractérisé en ce que** l'évidement (30) de la plaque de support (10) formant l'écran présente une bordure (32) qui fait saillie par rapport au côté de la plaque de support (10) orienté vers le pare-brise (12).

7. Dispositif support selon l'une quelconque des revendications 1 à 6, **caractérisé en ce que** la force supportant la caméra (22), le capteur ou similaire contre l'agencement support (34) peut être appliquée au moyen d'un agencement de ressort (40) disposé sur la plaque de support (10).

8. Dispositif support selon l'une quelconque des revendications 1 à 7, **caractérisé en ce qu'**il est prévu un revêtement (16) qui permet de recouvrir au moins l'un parmi la caméra (22), le capteur (20) ou similaire et qui peut être disposé de manière relativement réglable sur la plaque de support (10).

9. Dispositif support selon la revendication 8, **caractérisé en ce qu'**il est prévu des éléments de support (36, 38) en interaction afin de régler le revêtement (16) par rapport à la plaque de support (10) sur les deux composants (10, 16), le réglage s'effectuant par étapes ou en continu.

10. Dispositif support selon l'une quelconque des revendications 8 ou 9, **caractérisé en ce que** le revêtement (16) présente un écran (56).

11. Dispositif support selon la revendication 10, **caractérisé en ce que** le revêtement (16) est pourvu au moins en partie d'un vernis.

12. Dispositif support selon l'une quelconque des revendications 1 à 11, **caractérisé en ce qu'**un chauffage de pare-brise est intégré dans le dispositif support, en particulier dans la plaque de support (10), laquelle chauffe au moins une partie du pare-brise (12) à proximité de la caméra (22), du capteur ou similaire.

13. Dispositif support selon l'une quelconque des revendications 1 à 12, **caractérisé en ce que** l'additif est formé à partir de fibres de renfort, en particulier des fibres de verre.

14. Dispositif support selon l'une quelconque des revendications 1 à 12, **caractérisé en ce que** l'additif est formé à partir de billes de verre.

15. Dispositif support selon l'une quelconque des revendications 1 à 14, **caractérisé en ce que** la proportion d'additif dans la matière plastique varie entre 10 et 40 %, et en particulier entre 20 et 30 %.
